# EUROPEAN PATENT APPLICATION

(11) **EP 1 707 752 A1**
(43) Date of publication of application: **04.10.2006**
(21) Application number: 05257852.3
(22) Date of filing: 20.12.2005
(51) Int. Cl.: F01D 15/10, F02C 7/12

(54) **Turbogenerator**

(30) Priority: 23.12.2004 IT MI20042485
(71) Applicant: Nuovo Pignone S.P.A., 50127 Florence (IT)
(72) Inventor: Frosini, Guido, 50143 Firenze (IT); Mercer, Gary David, Simpsonville, South Carolina 29681 (US); Chiari, Simone, 59015 Carmignano (Prato) (IT); Weeber, Konrad Roman, Rexford, New York 12148 (US)
(74) Representative: Goode, Ian Roy

(57) **Abstract**

Turbogenerator (10) comprising a turbine (20), an electric generator (30) directly connected to said turbine (20), and a static frequency converter (40) connected to said electric generator (30) and associated with an electric system, the turbogenerator (10) comprising a single cooling device (60) for the turbine (20) and for the electric generator (30).

## Description

The present invention relates to a turbogenerator which can be used in particular in a thermo-electric plant for the generation of electric power.

The main components of a turbogenerator normally consist of a gas turbine for the generation of mechanical energy, and an electric generator or alternator for converting the mechanical energy into electric power.

The electric power obtained directly from mechanical energy is typically electric power in alternate current.

On the basis of the rotation of a shaft of the turbine, an alternate electric current is thus obtained, whose frequency depends directly on the number of revs per minute of the turbine shaft.

In other words, the higher is the rotation rate of the turbine shaft, the higher the frequency will be of the electric current obtained by the shaft.

Gas turbines having small and medium capacities only have a high efficiency under functioning conditions in which the rotation rate of the shaft, expressed in revs per minute is high, and typically ranges from 5,000 to 20,000 revs/minute.

This means that by transforming the mechanical energy of the shaft, an alternate electric current would be obtained at a higher frequency and consequently not compatible with that of the electric systems commonly used for the transferring and distribution of energy.

Electric systems do in fact have alternate currents at a frequency of 50 Hz or 60 Hz depending on the standard used by a certain country.

In order therefore to be able to have an electric power at the typical frequency of an electric system of 50 Hz, it is necessary to have a low rotation rate, for example ranging from 3,000 to 1,500 revs/minute respectively in the case of an alternator having 2 or 4 poles.

This necessarily requires the coupling of the gas turbine with a reducer of the rev number in order to obtain an adaptation of the rotation rate of the shaft of the turbine so that this can be compatible with the number of revs required by the alternator.

In the case of gas turbines having a power of 4 or 5 MW, it is therefore necessary to have a rev number reducer suitably dimensioned for tolerating the mechanical power generated by the gas turbine.

The rev reducer consequently has large dimensions and also requires a lubricating system in proportion with it.

One of the disadvantages is therefore that in addition to being onerous in terms of cost and set up, the reducer also has a high encumbrance, thus increasing the overall dimension of the turbogenerator.

The lubricating system is also therefore encumbering in addition to requiring a high quantity of lubricant as it is proportional to the reducer itself.

Furthermore, the lubricant must be substituted and also disposed of, within a pre-established number of functioning hours, with consequent additional costs.

The turbine and current generator, moreover, also each have a cooling system.

The turbine also has an air feeding system for its functioning.

Another disadvantage of the known power systems is that they require high maintenance costs for each air feeding system and each cooling system.

The maintenance costs of the air feeding systems and cooling systems of the components represent fixed costs over a period of time which consequently influence the price of the electric power unit produced.

Another drawback of the current power systems for the generation of electric power is that their assembly, effected in loco in a certain plant, is often difficult and also requires a long time for accurately aligning the turbine and generator to avoid problems during the functioning of the turbogenerator itself.

One of the disadvantages of the known power systems therefore is that they have high installation costs.

An objective is to provide a turbogenerator which has a reduced number of components to increase reliability and availability.

Another objective is to be able to provide a turbogenerator which reduces the installation and maintenance costs of the system itself.

A further objective is to provide a turbogenerator which has a reduced weight and encumbrance.

A further objective is to provide a turbogenerator which is compact and can be easily transported.

Yet another objective is to provide a turbogenerator which is simple and economical.

These objectives according to the present invention are achieved by providing a turbogenerator as specified in claim 1.

Further characteristics of the invention are indicated in the subsequent claims.

The characteristics and advantages of a turbogenerator according to the present invention will appear more evident from the following illustrative and nonlimiting description, referring to the enclosed schematic drawings in which:

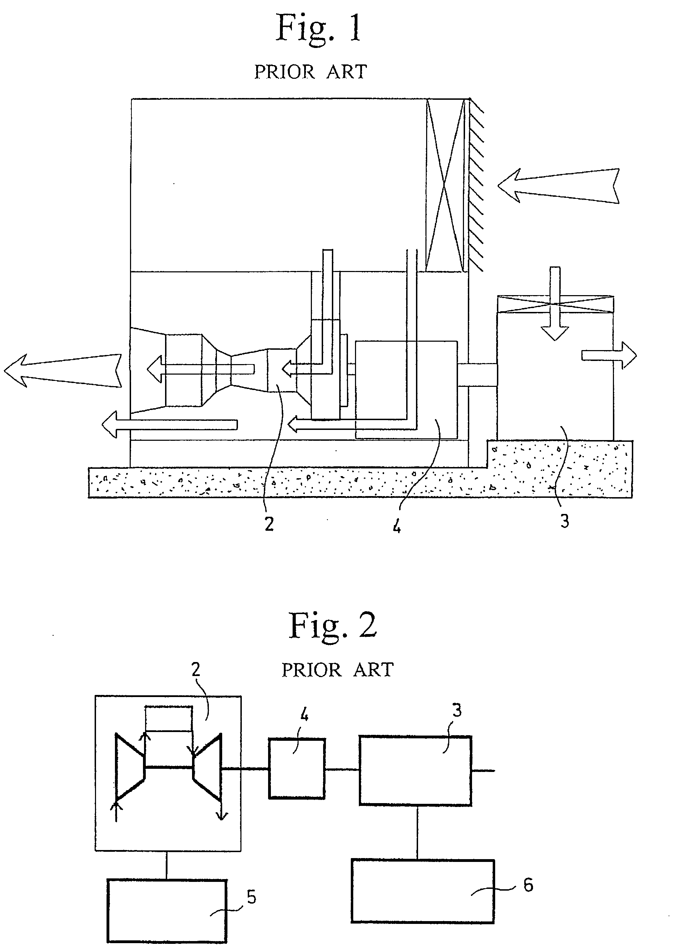

Figure 1 is a raised side view of a turbogenerator according to the known art;
Figure 2 is a schematic view of a turbogenerator according to the known art;
Figure 3 is a schematic view of a first preferred embodiment of a turbogenerator according to the present invention;
Figure 4 is a raised schematic view of a second preferred embodiment of a turbogenerator;
Figure 5 is a raised view of a third preferred embodiment of a turbogenerator;
Figure 6 is a raised view of a fourth preferred embodiment of a turbogenerator;

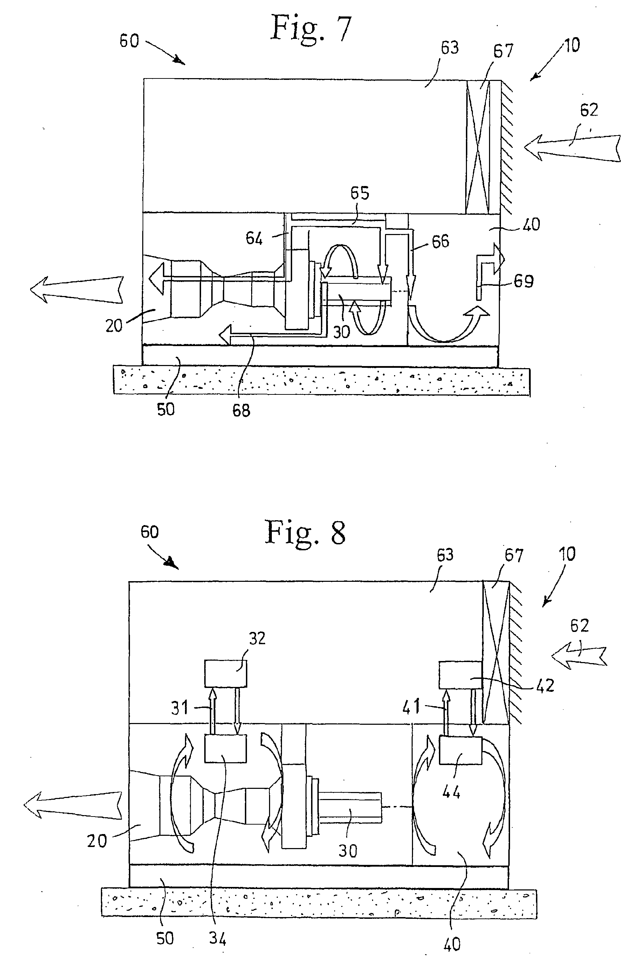

Figure 7 is a raised view of a fifth preferred embodiment of a turbogenerator;
Figure 8 is a raised view of a sixth preferred embodiment of a turbogenerator;
Figure 9 is a raised view of a seventh preferred embodiment of a turbogenerator.

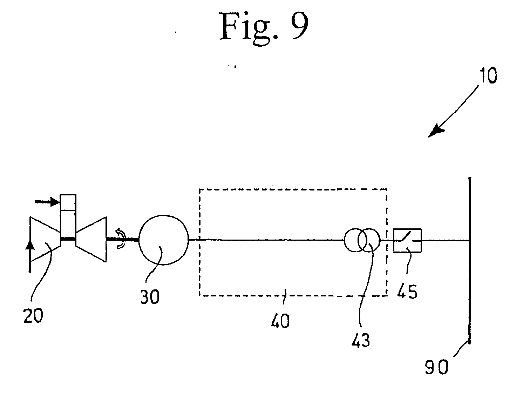

With reference to figure 9, this shows a turbogenerator 10, which comprises a turbine 20, an electric generator 30 directly connected to said turbine 20, a static frequency converter 40 connected to said electric generator 30 and associated with an electric system 90.

Said turbogenerator 10 comprises a single cooling device 60 integrated for said turbine 20 and for said current generator 30 and also preferably for said frequency converter 40.

According to a first preferred embodiment, said cooling device 60 is preferably an air cooling device.

Said cooling device 60 comprises a suction duct 62 connected to a chamber 63.

Said cooling device 60 also comprises a first air feeding duct 64 which connects said chamber 63 to said turbine 20 to provide feeding air for a burner and for the cooling of the hottest points of the turbine 20 itself.

Said cooling device 60 also comprises a second air feeding duct 65 which preferably connects said chamber 63 to said current generator 30 or preferably connects said first air feeding duct 64 to said current generator 30.

Said cooling device 60 preferably comprises a suction filter 67 for the air sucked thereby, preferably housed in said suction duct 62 in order to filter the air to feed the components of said turbogenerator 10.

Said cooling device 60 preferably comprises a third feeding duct 66 which preferably connects said chamber 63 to said frequency converter 40.

According to a preferred alternative embodiment, said third duct 66 connects said second duct 65 to said frequency converter 40.

In this way, it is possible to use a single chamber 63 instead of two or three chambers respectively for the current generator 30, for the frequency converter 40 and for the turbine 20.

The fact that there is only one suction duct 62 and also only one filter 67 for the air, considerably reduces the number of components of the turbogenerator 10.

The maintenance operations of said turbogenerator 10 are also advantageously reduced and facilitated.

The generator 30 and the turbine 20, and preferably also the frequency converter 40, share the cooling device 60, and in particular share the same air suction duct 62, the same filter 67 and the same chamber 63.

The exhausted air is then evacuated separately from the generator 30 respectively by means of a first evacuation duct 68, whereas for the turbine, the air is evacuated by the discharge duct with which it is equipped.

The air is preferably evacuated from the frequency converter 40 respectively by means of a second evacuation duct 69.

According to another aspect of the present invention, a turbogenerator 10 is provided equipped with a water cooling device 60.

In other words, the turbine 20 and the generator 30 are cooled with water.

The frequency converter 40 is also preferably cooled with water.

Said cooling device 60 preferably comprises at least a first gas/liquid heat exchanger 32 and at least a second liquid/gas heat exchanger 34 for the cooling of said turbine 20 and/or said current generator 30.

Said at least first gas/liquid heat exchanger 32 and said at least second gas/liquid heat exchanger 34 also cool said frequency converter 40.

Said at least first gas/liquid heat exchanger 32 allows the exchange of heat between the air of the chamber 63 and a liquid contained in a first cooling circuit 31.

In particular, said at least first gas/liquid heat exchanger 32 allows the exchange of heat between the air of said first feeding duct 64 and a liquid of said second cooling circuit 41.

Said at least second liquid/gas heat exchanger 34 allows the exchange of heat between said liquid contained in said first cooling circuit 31 and the air close to said turbine 20 and/or of said current generator 30 and/or preferably of said frequency converter 40.

According to another embodiment said cooling device 60 preferably comprises a third gas/liquid heat exchanger 42 and a fourth liquid/gas heat exchanger 44 for said frequency converter 40.

Correspondingly, the third gas/liquid heat exchanger 42 allows heat exchange between the air of the chamber 63 and a liquid contained in a second cooling circuit 41.

In particular, the third gas/liquid heat exchanger 42 allows heat exchange between the air of said second feeding duct 65 and a liquid contained in said second cooling circuit 41.

Analogously, said fourth liquid/gas heat exchanger 44 allows heat exchange between said liquid contained in said second cooling circuit 41 and the air close to said frequency converter 40.

Said cooling device 60 preferably comprises at least one ventilator for said suction duct 62.

Said cooling device 60 preferably comprises at least one pump for circulating said liquid in said first cooling circuit 31 and/or said second liquid cooling circuit 41.

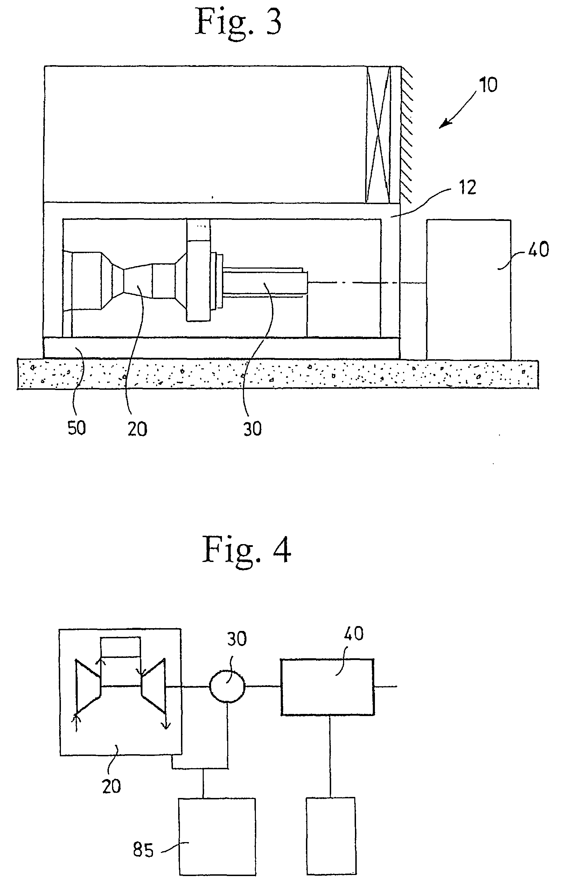

With reference to figure 3, according to a further preferred embodiment, said turbine 20 and said electric generator 30 are constrained to a single supporting base 50 which is preferably metallic.

This avoids drawbacks due to rigid foundations of hard cementitious material, thus obtaining a greater reliability of the turbogenerator with time.

In other words, the supporting bases of said turbine 20 and said electric generator 30 are integrated in a single metallic supporting base 50.

It is therefore possible to also effect the centering and alignment of said turbine 20 and said electric generator 30 directly in the manufacturing phase obtaining a pre-assembled turbogenerator 10.

Said frequency converter 40 is also preferably constrained to said supporting base 50.

The moving and installation operations of the turbogenerator 10 are therefore advantageously extremely simplified.

Said turbogenerator 10 preferably comprises a single soundproofing casing 12 for said turbine 20, for said current generator 30 and preferably for said frequency converter 40.

In other words, instead of having separate soundproofing casings for each component, said turbogenerator 10 has a single soundproofing casing 12 in which said turbine 20, said generator 30 are inserted.

Said soundproofing casing 12 is preferably coupled with said supporting base 50 and has the function of lowering the sound generated by the components of the turbogenerator itself 10.

Said frequency converter 40 preferably comprises at least one voltage and current transformer 43.

Said turbogenerator 10 preferably comprises a high voltage circuital switch 45 which is connected between said frequency converter 40 and said electric system 90.

The rotating windings of said generator 30 are preferably assembled on a rotating shaft of said turbine 20 or coupled therewith by means of a rigid or flexible coupling.

The encumbrance and weight of the whole turbogenerator is advantageously considerably reduced by means of a turbogenerator according to the present invention and an increase of 1% of the efficiency of the turbogenerator itself is also obtained.

As it is more compact, the turbogenerator is advantageously easier to transport.

Said turbogenerator 10 is preferably constrained to a means of transport, not shown in the figures, to obtain a mobile turbogenerator 10.

The turbogenerator 10 is therefore capable of converting the mechanical energy generated by the turbine 20 into electric power at the frequency of the electric system.

The generator 30 and the turbine 20 rotor are preferably coupled by means of a hard or flexible coupling.

The turbogenerator 10 preferably comprises an insulating element, not shown, capable of absorbing the vibrations, inserted between said frequency converter 40 and said supporting base 50.

Alternatively another kind of anti-vibrating suspension device capable of absorbing vibrations can be inserted between said frequency converter 40 and said base 50.

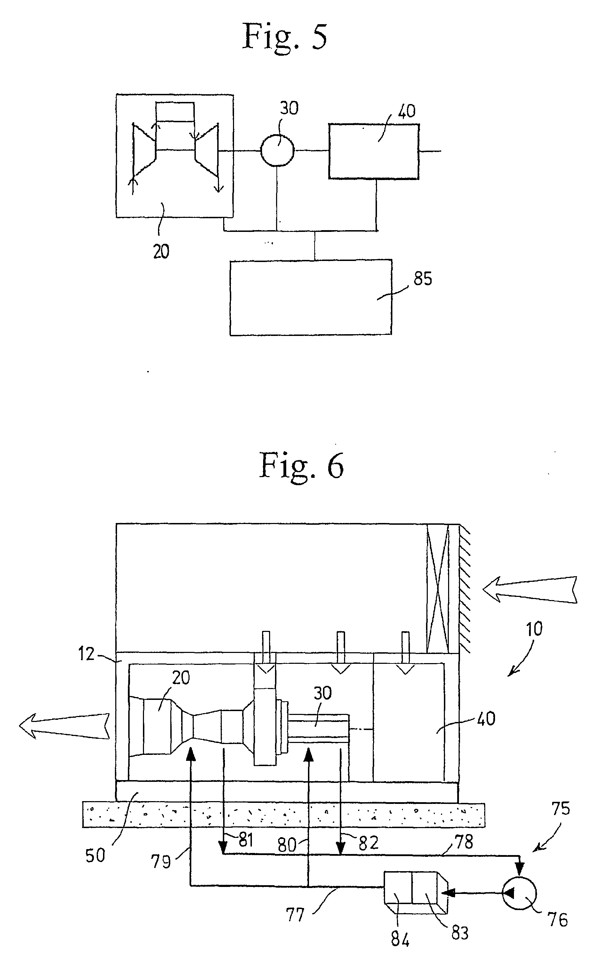

With reference to figure 6, according to a further preferred embodiment, said turbogenerator 10 preferably comprises an integrated lubricating device 75 for said turbine 20 and for said current generator 30.

Said lubricating device 75 comprises a pump 76 for pumping oil into an outgoing duct 77 connected thereto, a return duct 78 for collecting the oil returning from said turbine 20 and from said current generator 30 also connected to the pump 76.

Said lubricating device 75 also comprises a first and a second oil feeding duct 79 and 80.

Said first duct 79 is connected at a first end to said outgoing duct 77 and at a second end it is connected to said turbine 20 to lubricate it with lubricating oil.

Said second duct 80 is connected at a first end to said outgoing duct 77 and at a second end it is connected to said current generator 30.

Said lubricating device 75 finally comprises a third and fourth return or collection duct of the oil, respectively indicated with 81 and 82 for collecting the returning oil and sending it towards the pump 76.

Said third duct 81 is connected at a first end to said turbine 20 and at a second end it is connected to said return duct, in turn connected to said oil pump 76.

Said fourth duct 82 is connected at a first end to said current generator 30 and at a second end it is connected to said return duct 78.

The turbine 20 and the electricity generator 30 share the same lubrication device 75, advantageously reducing the necessity of oil for their lubrication and consequently simplifying the turbogenerator 10.

The maintenance operations of said turbogenerator 10 are also advantageously reduced and facilitated.

The number of pumps necessary for the correct functioning of the turbogenerator is advantageously reduced to the minimum by means of a turbogenerator of a lubricating device according to the present invention.

The maintenance costs and also the quantity of lubricant necessary are also advantageously reduced.

According to a preferred embodiment a turbogenerator 10 is provided, which preferably comprises a single integrated control and driving device 85 for said turbine 20 and said current generator 30, schematically shown in figure 4.

Said control and driving device 85 comprises a control board and a central control and driving unit which receives signals from said turbine 20 and from said current generator 30 to control their functioning and to drive their functioning parameters, by means of control signals.

Said control board visualizes the functioning parameters of the turbine 20 and current generator 30 received from the central control and driving unit and is also capable of receiving inlet control signals by means of a user interface.

Said control signals are transmitted to the central control and driving unit which modifies the functioning parameters of the turbine 20 and current generator 30.

In this way, it is possible to have a single display unit and a single central control and driving unit for said turbine 20 and for said current generator 30.

According to another embodiment, with reference to figure 5, the control and driving device 85 is single for said turbine 20, for said current generator 30 and for said frequency converter 40, i.e. the respective control and driving boards are integrated in a single control and driving device, and possibly with a separate user interface for said frequency converter 40.

The structure of the control and driving device is consequently advantageously simplified, reducing the number of components and their wiring, and also reducing the encumbrance of the turbogenerator itself.

According to a preferred embodiment, said turbine 20 is integrated with said current generator 30.

According to a further preferred embodiment, said turbine 20 is integrated with said current generator 30 and with said frequency converter 40.

This advantageously leads to a further reduction in the weight and encumbrance of the turbogenerator.

It can thus be seen that a turbogenerator according to the present invention achieves the objectives indicated above.

Furthermore, in practice, the materials used, as also the dimensions and components, can vary according to technical demands.

For completeness, various aspects of the invention are set out in the following numbered clauses:
1. A turbogenerator (10) comprising a turbine (20), an electric generator (30) directly connected to said turbine (20), a static frequency converter (40) connected to said electric generator (30) and associated with an electric system (90), characterized in that it comprises a single cooling device (60) for said turbine (20) and for said electric generator (30).
2. The turbogenerator (10) according to clause 1, characterized in that said cooling device (60) is an air cooling device.
3. The turbogenerator (10) according to clause 1 or 2, characterized in that said cooling device (60) comprises a chamber (63) and a suction duct (62) connected to said chamber (63).
4. The turbogenerator (10) according to any of the clauses from 1 to 3, characterized in that said cooling device (60) comprises a first duct (64) and a second air feeding duct (65) for said turbine (20) and for said current generator (30), respectively.
5. The turbogenerator (10) according to clause 3, characterized in that said first feeding duct (64) is connected at a first end to said chamber (63) and at a second end to said turbine (20) and in that said second air feeding duct (65) is connected at a first end to said first duct (64) and at a second end it is connected to said current generator (30).
6. The turbogenerator (10) according to any of the clauses from 1 to 5, characterized in that said cooling device (60) comprises a suction filter (67).
7. The turbogenerator (10) according to clause 6, characterized in that said suction filter (67) is housed inside said suction duct (62).
8. The turbogenerator (10) according to any of the clauses from 3 to 7, characterized in that said cooling device (60) comprises a third feeding duct (66) which connects said second air feeding duct (65) to said frequency converter (40).
9. The turbogenerator (10) according to any of the clauses from 3 to 8, characterized in that said cooling device (60) comprises a first air evacuation duct (68) for said generator (30), a second air evacuation duct (69) for said frequency converter (40).
10. The turbogenerator (10) according to any of the clauses from 1 to 9, characterized in that said cooling device (60) comprises at least a first gas/liquid heat exchanger (32) and at least a second liquid/gas heat exchanger (34) for said turbine (20) and for said current generator (30).
11. The turbogenerator (10) according to any of the clauses from 1 to 10, characterized in that said cooling device (60) comprises a third gas/liquid heat exchanger (42) and a fourth liquid/gas heat exchanger (44) for said frequency converter (40).
12. The turbogenerator (10) according to clause 10, characterized in that said cooling device (60) comprises a first liquid cooling circuit (31).
13. The turbogenerator (10) according to clause 11, characterized in that said cooling device (60) comprises a second liquid cooling circuit (41).
14. The turbogenerator (10) according to clause 1, characterized in that said cooling device (60) comprises at least one ventilator.
15. The turbogenerator (10) according to clause 1, characterized in that said cooling device (60) comprises at least one pump.
16. The turbogenerator (10) according to any of the clauses from 1 to 15, characterized in that said turbine (20) is integrated with said current generator (30).
17. The turbogenerator (10) according to any of the clauses from 1 to 15, characterized in that said gas turbine (20) is integrated with said current generator (30) and with said frequency converter (40).

## Claims

1. A turbogenerator (10) comprising a turbine (20), an electric generator (30) directly connected to said turbine (20), a static frequency converter (40) connected to said electric generator (30) and associated with an electric system (90), **characterized in that** it comprises a single cooling device (60) for said turbine (20) and for said electric generator (30).

2. The turbogenerator (10) according to claim 1, **characterized in that** said cooling device (60) is an air cooling device.

3. The turbogenerator (10) according to claim 1 or 2, **characterized in that** said cooling device (60) comprises a chamber (63) and a suction duct (62) connected to said chamber (63).

4. The turbogenerator (10) according to any of the claims from 1 to 3, **characterized in that** said cooling device (60) comprises a first duct (64) and a second air feeding duct (65) for said turbine (20) and for said current generator (30), respectively.

5. The turbogenerator (10) according to claim 3, **characterized in that** said first feeding duct (64) is connected at a first end to said chamber (63) and at a second end to said turbine (20) and **in that** said second air feeding duct (65) is connected at a first end to said first duct (64) and at a second end it is connected to said current generator (30).

6. The turbogenerator (10) according to any of the claims from 1 to 5, **characterized in that** said cooling device (60) comprises a suction filter (67).

7. The turbogenerator (10) according to any of the claims from 1 to 6, **characterized in that** said cooling device (60) comprises at least a first gas/liquid heat exchanger (32) and at least a second liquid/gas heat exchanger (34) for said turbine (20) and for said current generator (30).

8. The turbogenerator (10) according to any of the claims from 1 to 7, **characterized in that** said cooling device (60) comprises a third gas/liquid heat exchanger (42) and a fourth liquid/gas heat exchanger (44) for said frequency converter (40).

9. The turbogenerator (10) according to claim 1, **characterized in that** said cooling device (60) comprises at least one ventilator.

10. The turbogenerator (10) according to claim 1, **characterized in that** said cooling device (60) comprises at least one pump.
